Europäisches Patentamt

European Patent Office

Office européen des brevets

(19)

(11) **EP 1 153 951 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(51) Int Cl.$^7$: **C08G 18/66**

(21) Anmeldenummer: **01110042.7**

(22) Anmeldetag: **27.04.2001**

(54) **Formkörper aus thermoplastischen Polyurethanen mit reduziertem Fogging**

Moulded piece based on thermoplastic polyurethane having reduced fogging

Pièce moulée à partir d'un polyuréthane thermoplastique ne donnant pas lieu à la formation de brouillard

(84) Benannte Vertragsstaaten:
**AT BE CH CY DE DK ES FI FR GB GR IE IT LI LU MC NL PT SE TR**

(30) Priorität: **10.05.2000 DE 10022848**

(43) Veröffentlichungstag der Anmeldung:
**14.11.2001 Patentblatt 2001/46**

(73) Patentinhaber: **Bayer MaterialScience AG 51368 Leverkusen (DE)**

(72) Erfinder:
• **Kaufhold, Wolfgang, Dr.
51061 Köln (DE)**
• **Hoppe, Hans-Georg
42799 Leichlingen (DE)**

• **Röhrig, Wolfgang
51467 Bergisch Gladbach (DE)**

(56) Entgegenhaltungen:
**EP-A- 0 460 481          EP-A- 0 719 808
DE-A- 19 601 410**

• **DATABASE WPI Week 9606 Derwent Publications Ltd., London, GB; AN 1996-056029 XP002174981 "Thermoplastic resin composition for durable powder moulding" & JP 07 316254 A (NIPPON POLYURETHANE), 5. Dezember 1995 (1995-12-05)**
• **DATABASE WPI Week 9816 Derwent Publications Ltd., London, GB; AN 1998-174975 XP002174982 "Polyester resin composition for powder coating" & JP 10 036476 A (NIPPON YUPIKA), 10. Februar 1998 (1998-02-10)**

EP 1 153 951 B1

**Beschreibung**

Die Erfindung betrifft Formkörper aus thermoplastischen Polyurethanen (TPU) mit reduziertem Foggingverhalten.

Thermoplastische Polyurethan-Elastomere sind seit langem bekannt. Sie sind aufgrund der Kombination hochwertiger mechanischer Eigenschaften mit den bekannten Vorteilen der kostengünstigen thermoplastischen Verarbeitbarkeit von technischer Bedeutung. Durch die Verwendung unterschiedlicher chemischer Aufbaukomponenten lässt sich eine große Variationsbreite mechanischer Eigenschaften erzielen. Eine Übersicht über TPUs, ihre Eigenschaften und Anwendungen wird z.B. in Kunststoffe 68 (1978), Seiten 819 bis 825 und Kautschuk, Gummi, Kunststoffe 35 (1982), Seiten 568 bis 584 gegeben.

TPUs werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte im Härtebereich von 70 Shore A bis 75 Shore D.

TPUs können kontinuierlich oder diskontinuierlich hergestellt werden. Die bekanntesten technischen Herstellverfahren sind das Bandverfahren (GB-A 1,057,018) und das Extruderverfahren (DE-A 1 964 834 und 2 059 570).

Es ist bekannt (EP-A 579 988, DE-A 19 611 670), dass die Polyesterpolyole, die im Polyurethanbereich eingesetzt werden, niedermolekulare cyclische Verbindungen enthalten, die bei Anwendung der Polyurethane zum sogenannten 'Fogging-Effekt' führen. Unter 'Fogging-Effekt' wird ein lichtstreuender Effekt verstanden, der aufgrund der Kondensation der sich bildenden, vor allen Dingen cyclischen Verbindungen an den Innenflächen von Glasscheiben auftritt. Dieser macht sich insbesondere im Automobilbau störend bemerkbar, wenn infolge der Foggingentwicklung aus den Polyurethanen der Innenausstattung die Scheiben beschlagen.

Die heutigen Anforderungen an Materialien für den Einsatz in der Innenausstattung von Kraftfahrzeugen sind sehr vielschichtig. Auf Grund der geforderten Wärme- bzw. Heißluft-Stabilität werden als Polyole bevorzugt Polyesterpolyole oder Gemische von Polyesterpolyolen und Polyetherpolyolen für thermoplastische Polyurethane eingesetzt. Aus der Polyurethanweichschaumstoff-Herstellung ist bekannt (EP-A 579 988), dass aus Polyesterpolyurethan-Schaumstoffen ebenfalls Substanzen austreten, die zu optisch sichtbaren Scheibenniederschlägen führen.

Die Anforderung an Formkörper für die Automobilinnenausstattung ist daher zusätzlich ein reduziertes Fogging-Verhalten. So wird von einigen Automobilherstellern ein Kondensatwert des Formkörpers (16h bei 120°C gemäß DIN 75201B) von kleiner 6 mg pro 10 g TPU gefordert. Andere Hersteller fordern sogar noch niedrigere Kondensatwerte bei den Formkörpern.

Der in der DE-A 19 757 562 vorgeschlagene Weg zur Reduzierung des Kondensatwertes des TPU mittels Durchströmung des Granulates mit heißem Gas (z.B. Luft) für 5h bis 20h bei 80° bis 110°C ist für TPUs, welche Polyetherdiole enthalten, ungeeignet. Die polyetherhaltigen TPUs neigen bei dieser Heißgasbehandlung zur Farbänderung (z.B. von weiß nach grau), was insbesondere für Anwendungen im Automobilinnenraum nachteilig ist.

Aufgabe war es daher, Formkörper aus thermoplastischen Polyurethanen zur Verfügung zu stellen, die auch nach Verarbeitung (Compoundieren mit Farb-und Zuschlagstoffen) und Formgebung (Spritzgießen, Extrusion, Powder-Slush-Verfahren) niedrige Foggingwerte aufweisen (gemessen gemäß DIN 75201B bei 120°C und 16 Stunden).

Aus US-A 5,545,675 und EP-A 579 988 ist bekannt, dass Polyesterdiole und cyclische Ringester (Hauptverursacher des Foggingeffektes neben Additiven) in einem thermodynamischen Gleichgewicht stehen. Aus diesem Grund können sich die cyclischen Ringester nach der Destillation von Polyesterdiolen zur Herstellung von Ringesterfreien Polyesterdiolen im Destillationsrückstand, insbesondere bei höheren Temperaturen wieder zurückbilden. Die physikalische Entfernung der Ringester (EP-A 579 988) aus dem eingesetzten Polyesterpolyol mittels Vakuumdestillation mit handelsüblichen Apparaten, die unter den Bezeichnungen Dünnschichtverdampfer oder Kurzwegverdampfer vielfältig in der chemischen Industrie Anwendung finden, ist bekannt. In US-A 5,545,675 und EP-A 579 988 wird wegen des thermodynamischen Gleichgewichtes darauf hingwiesen, dass das Polyesterdiol nach Verlassen der Destillationsapparatur rasch auf Temperaturen von unter 120°C gekühlt werden muss.

Es war umso überraschender, dass trotz Extruderverfahrens, bei dem Massetemperaturen von 180° bis 240°C bei Verweilzeiten von 30-90 Sekunden auftreten, thermoplastische Polyurethane (TPU) auf Polyesterdiol-Basis erhalten werden können, die niedrige Foggingwerte aufweisen. Anscheinend bilden sich keine Cyclen (Ringester) während der Herstellung der erfindungsgemäßen TPUs. Weiterhin überraschend war auch, dass selbst nach Compoundieren und Formgebung, wobei wiederum Massetemperaturen von 180-230°C bei Verweilzeiten von 30-120 Sekunden auftreten, TPU-Formteile erhalten werden, welche ebenfalls niedrige Foggingwerte aufweisen.

Gegenstand der vorliegenden Erfindung sind Formkörper aus thermoplastischen Polyurethanen, welche dadurch gekennzeichnet sind, dass sie einen Kondensatwert von <2 mg / 10 g thermoplastisches Polyurethan bei einem Foggingtest gemäß DIN 75 201 B bei 120°C und 16 Stunden aufweisen und erhältlich sind aus thermoplastischen Polyurethanen mit einem Kondensatwert von <2 mg / 10 g thermoplastisches Polyurethan bei einem Foggingtest gemäß DIN 75 201 B bei 120°C und 16 Stunden, wobei die thermoplastischen Polyurethane erhältlich sind aus

A) einem organischen Diisocyanat,

B) 20 bis 100 Gew.-%, bevorzugt 30 bis 100 Gew.-% Polyesterpolyol mit einem zahlenmittleren Molekulargewicht von 600 bis 10 000 g/Mol und einem Gehalt an 1:1 -Ringestern aus Dicarbonsäure und Diol von <0,2 Gew.-%, bezogen auf Polyesterpolyol, bevorzugt von <0,15 Gew.-% und 0 bis 80 Gew.-%, bevorzugt 0 bis 70 Gew.-% Polyetherpolyol oder Polycarbonatdiol mit einem zahlenmittleren Molekulargewicht von jeweils 600 bis 10 000 g / Mol und

C) einem Diol- und/oder Diamin-Kettenverlängerer mit einem mittleren Molekulargewicht von 60 bis 500 g/Mol, unter Zusatz von

D) gegebenenfalls Katalysatoren und

E) gegebenenfalls üblichen Hilfsmitteln und Zusatzstoffen, wobei das Äquivalenzverhältnis von Diisocyanat A) zu Polyol B) zwischen 1,5:1,0 und 10,0:1,0 liegt und wobei die NCO-Kennzahl (gebildet aus dem mit 100 multiplizierten Quotienten der Äquivalenzverhältnisse von Isocyanatgruppen und der Summe der Hydroxylgruppen aus Polyol und Kettenverlängerungsmittel) 95 bis 105 beträgt.

Der Ausdruck "1:1-Ringester aus Dicarbonsäure und Diol" bedeutet das Reaktionsprodukt von 1 mol Dicarbonsäure und 1 mol Diol.

Als Komponente A) können aliphatische, cycloaliphatische, araliphatische, aromatische und heterocyclische Diisocyanate oder beliebige Gemische dieser Polyisocyanate verwendet werden (vgl. HOUBEN-WEYL "Methoden der organischen Chemie", Band E 20 "Makromolekulare Stoffe", Georg Thieme Verlag, Stuttgart, New York, 1987, S. 1587-1593 oder Justus Liebigs Annalen der Chemie, 562, Seiten 75 bis 136).

Im einzelnen seien beispielhaft genannt: aliphatische Diisocyanate wie Ethylendiisocyanat, 1,4-Tetramethylendiisocyant, 1,6-Hexamethylendiisocyanat, 1,12-Dodecandiisocyanat, cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, außerdem aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyaohexylnlethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens soviel Polyisocyanat zugesetzt werden, daß ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Für Anwendungen mit besonders hohen Anforderungen an die Lichtstabilität werden aliphatische oder cycloaliphatische Diisocyanate bevorzugt.

Als Komponente B) werden lineare hydroxylterminierte Polyole mit einem mittleren Molekulargewicht von 600 bis 10000 g/Mol, bevorzugt von 600 bis 5000 g/Mol eingesetzt. Produktionsbedingt enthalten diese oft kleine Mengen an nichtlinearen Verbindungen. Häufig spricht man daher auch von "im wesentlichen linearen Polyolen".

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate. Die Polyesterdiole besitzen mittlere Molekulargewichte von 600 bis 10 000, bevorzugt von 600 bis 5 000 und können einzeln oder in Form von Mischungen untereinander zur Anwendung kommen.

Der Ringestergehalt dieser Polyesterdiole kann durch Destillation in handelsüblichen Apparaten wie Dünnschichtverdampfern und Kurzwegverdampfer auf kleiner 0,2 Gew.-%, bevorzugt kleiner 0,15 Gew.- %, reduziert werden.

Geeignet sind ferner Ester der Kohlensäure mit den genannten Diolen (Polyearbonatdiolen), insbesondere solchen mit 4 bis 6 Kohlenstoffatomen, wie 1,4-Butandiol oder 1,6-Hexandiol. Kondensationsprodukte von Hydroxycarbonsäuren, beispielsweise Hydroxycapronsäure und Polymerisationsprodukte von Lactonen, beispielsweise gegebenenfalls substituierten Caprolactonen.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im wesentlichen linearen Polyetherdiole besitzen Molekulargewichte von 600 bis 10 000, bevorzugt von 600 bis 5 000. Sie können sowohl einzeln als auch in Form von Mischungen untereinander zur Anwendung kommen.

Besonders bevorzugt sind hydroxylgruppenhaltige Polymerisationsprodukte des Tetrahydrofurans und Polyetherdiole auf Basis Ethylenoxid und/oder Propylenoxid.

Diese Polyetherdiole müssen qualitativ so beschaffen sein, dass der Foggingwert des TPUs gemäß DIN 75209B (120°C,16h) 2mg/10g TPU nicht überschreitet.

Als Kettenverlängerungsmittel C) werden aliphatische Diole oder Diamine mit einem Molekulargewicht von 60 bis 500 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol, oder (cyclo)aliphatische Diamine, wie z.B. Isophorondiamin, Ethylendiamin, 1,2-Propylendiamin, 1,3-Propylendiamin, N-Methyl-propylen-1,3-diamin, N,N'-Dimethylethylendiamin. Es können auch Gemische der oben genannten Kettenverlängerer eingesetzt werden. Daneben können auch kleinere Mengen an Triolen zugesetzt werden.

Besonders bevorzugt ist 1,6-Hexandiol als Kettenverlängerungsmittel, gegebenenfalls in Abmischung mit bis zu 20 Gew.-% Kettenverlängerer mit einem mittleren Molekulargewicht von 60 bis 500 g/Mol.

Als Kettenverlängerungsmittel C) können auch aromatische Diole und Diamine eingesetzt werden. Beispiele für geeignete aromatische Diole sind Diester der Terephthalsäure mit Glykolen mit 2 bis 4 Kohlenstoff-atomen, wie z. B. Terephthalsäurebis-ethylenglykol oder Terephthalsäure-bis-1,4-butandiol, Hydroxyalkylenether des Hydrochinons, wie z.B. 1,4-Di(-hydroxyethyl)-hydrochinon, und ethoxylierte Bisphenole. Beispiele für geeignete aromatische Diamine sind 2,4-Toluylen-diamin und 2,6-Toluylendiamin, 3,5-Diethyl-2,4-toluylendiamin und 3,5-Diethyl-2,6-toluylendiamin und primäre mono-, di-, tri- oder tetraalkylsubstituierte 4,4'-Diaminodiphenylmethane.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Bei der kontinuierlichen Herstellung der thermoplastischen Polyurethane gemäß dem Extruder- oder Bandverfahren können Katalysatoren D) eingesetzt werden. Geeignete Katalysatoren sind nach dem Stand der Technik bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt ist Dibutylzinndilaurat.

Neben den TPU-Komponenten und den Katalysatoren können auch Hilfsmittel und/oder Zusatzstoffe (E) bis zu 20 Gew.%, bezogen auf die Gesamtmenge TPU, zugesetzt werden. Sie können in einer der TPU-Komponenten, vorzugsweise in der Komponente B), vorgelöst werden oder auch ggf. nach erfolgter Reaktion in einem nachgeschalteten Mischaggragat, wie z.B. einem Extruder, zudosiert werden.

Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R. Gächter, H. Müller (Ed.): Taschenbuch der Kunststoff-Additive, 3. Ausgabe, Hanser Verlag, München 1989 oder DE-A-29 01 774.

TPUs können auch durch Compounds verschiedener TPUs hergestellt werden, wobei nicht jedes einzelne TPU alle entsprechenden Eigenschaften erfüllen muss.

Die TPUs werden zur Herstellung der erfindungsgemäßen Formkörper, insbesondere zur Herstellung von Extrudaten (z.B. Folien) und Spritzgießteilen eingesetzt. Durch ihre Eigenschaften sind sie besonders im Automobilinnenbereich bevorzugt. Des weiteren können die TPUs als sinterfähiges Pulver zur Herstellung der erfindungsgemäßen Formkörper in Form von Flächengebilden und Hohlkörpern verwendet werden.

Die Erfindung soll anhand der nachfolgenden Beispiele näher erläutert werden.

**Beispiele**

Destillation des Polyesterdiols

Für die Durchführung der Destillation eignen sich handelsübliche Apparate, die unter den Bezeichnungen Fallfilmverdampfer, Dünnschichtverdampfer oder Kurzwegverdampfer vielfältig in der chemischen Industrie Anwendung finden. Wegen der relativ hohen Viskosität der Polyester werden solche Geräte bevorzugt, bei denen das Produkt durch einen Rotor auf der Verdampferoberfläche gleichmäßig zu einer dünnen Schicht verteilt wird.

Die Destillation der Polyesterpolyole PE225B und DE 2028 wurden bei einer Temperatur von 200°C und einem Vakuum von 1-5 mbar durchgeführt. Nach der Destillation wurden die Polyesterdiole PE225B und DE 2028 auf Raumtemperatur gekühlt.

Der zum großen Teil für das ,Fogging' verantwortliche 1:1 Ringester wurde mittels GLC vor und nach der Destillation des Polyesterpolyols bestimmt.

1:1 Ringestergehalt vor der Destillation: 0,36 Gew.-% (bezogen auf Ester PE225B)
1:1 Ringestergehalt nach der Destillation: 0,09 Gew.-% (bezogen auf Ester PE225B).

Die Polyesterdiole (vor und nach der Destillation) wurden bei der Herstellung der thermoplastischen Polyurethane (TPU) eingesetzt.

Herstellung TPU

Die TPUs wurden folgendermaßen kontinuierlich hergestellt:

Ein Gemisch aus Komponente B), Komponente C), Dibutylzinndilaurat, Irganox® 1010 und Stabaxol® P200 (Zusammensetzung der TPU siehe Tabelle) wurde in einem Kessel unter Rühren auf ca. 110°C erhitzt und zusammen mit einem Diisocyanat, welches ebenfalls mittels Wärmeaustauscher auf ca. 110°C erhitzt wurde, durch einen Statikmischer der Firma Sulzer (DN6 mit 10 Mischelementen und einer Scherrate von 500 s$^{-1}$) intensiv gemischt und dann in den Einzug einer Schnecke (ZSK 32) geführt.

Das Gemisch reagierte auf dem Extruder (Schmelzetemperatur 180-210°C) bis zur vollständigen Umsetzung aus und wurde anschließend granuliert.

Alle Granulate wurden jeweils dem gleichen Trocknungszyklus (1 Stunde bei 90°C) unterworfen, damit die Vergleichbarkeit der Kondensatwerte gewährleistet war.

DBTL:                    Dibutylzinndilaurat
DE2020:                Polycarbonatdiol auf 1,6-Hexandiol-Basis mit mittlerem Molekulargewicht $\overline{M}_n$ = 2000 g/mol
DE2028:                Polydioladipat auf Basis Hexandiol und Neopentylglykol mit zahlenmittlerem Molekulargewicht $\overline{M}_n$ = 2000 g/mol
PE 225B:               Polybutandioladipat mit mittlerem Molekulargewicht $\overline{M}_n$= 2250 g/mol
1,4BDO:                 1,4-Butandiol
Acclaim® 2220:      Polyetherpolyol mit Polyoxypropylen-Polyoxethyleneinheiten (mit ca. 85% primären Hydroxylgruppen und einem mittleren Molekulargewicht $\overline{M}_n$ von ca. 2000 g/mol (Fa. Lyondell))
Terathane® 2000:    Polytetrahydrofurandiol mit $\overline{M}_n$ = 2000 g/mol (Fa. Du Pont)

HDI: Hexamethylendiisocyanat
Irganox® 1010: Tetrakis[methylen-(3,5-di-tert-butyl-4-hydroxyhydrocinnamate)]methan (Fa. Ciba)
1,6 HDO: 1,6-Hexandiol
Stabaxol® P200: Aromatisches Polycarbodiimid (Fa. Rhein-Chemie)

## Zusammensetzung der TPU

| TPU | Diisocyanat Mole | | Polyol 1 | Mole | Polyol 2 | Mole | 1,4BDO Mole | 1,6HDO Mole |
|---|---|---|---|---|---|---|---|---|
| Vergleich 1 | 6,72 | HDI | DE2020 | 1,0 | DE2028 | 1,0 | 4,79 | - |
| Vergleich 2 | 5,15 | HDI | PE225B | 1,0 | Acclaim® 2220 | 0,43 | - | 3,53 |
| Vergleich 3 | 2,67 | HDI | PE225B | 1,0 | - | - | 1,7 | - |
| Vergleich 4 | 4,23 | HDI | PE225B | 1,0 | Terathane® 2000 | 0,25 | - | 3,02 |
| Vergleich 5 | 5,15 | HDI | PE225B | 1,0 | Terathane® 2000 | 0,43 | - | 3,53 |
| Vergleich 6 | 6,72 | HDI | PE225B | 1,0 | Acclaim® 2220 | 1,0 | - | 4,79 |
| 1 | 6,72 | HDI | DE2020 | 1,0 | DE2028* | 1,0 | 4,79 | - |
| 2 | 5,15 | HDI | PE225B* | 1,0 | Acclaim® 2220 | 0,43 | - | 3,53 |
| 3 | 2,67 | HDI | PE225B* | 1,0 | - | - | 1,7 | - |

*: Polyesterdiole nach der Destillation

Alle TPU wurden mit 40 ppm DBTL, bezogen auf Polyole, hergestellt.

Die TPU enthalten zusätzlich folgende Additive:

1,0 Gew.-% Irganox® 1010 (bezogen auf die Summe aus A), B) und C)); 1,0 Gew.-% Stabaxol® P200 (bezogen auf Polyesterpolyol)

**Ergebnisse:**

| TPU | Kondensat in mg/10g |
|---|---|
| Vergleich 1 | 6,1 |
| Vergleich 2 | 10,7 |
| Vergleich 3 | 14 |
| Vergleich 4 | 12 |
| Vergleich 5 | 9,8 |
| Vergleich 6 | 5,0 |
| TPU 1 | 1,4 |
| TPU 2 | 1,0 |
| TPU 2 ** | 1,4 |
| TPU 1 * | 1,3 |
| TPU 3 | 1,1 |

*Aus TPU 1 wurden rechteckige Spritzplatten hergestellt (125 mm x 50 mm x 1 mm) und an diesen die Kondensatwerte ermittelt.

** TPU 2 wurde zweimal auf einem Brabender Plasti-Corder PL2000 extrudiert und an diesem Granulat die Kondensatwerte ermittelt.

Die Kondensatwerte wurden, am Granulat bzw. an der Spritzplatte, bei 120°C und 16 Stunden gemäß DIN 75201B gemessen.

Überraschenderweise wurden beim Einsatz von destillierten Polyesterdiolen TPU erhalten, die auch nach Synthese bei Massetemperaturen von 180-210°C, Kondensatwerte aufweisen, die die Grenze von 2mg pro 10 g TPU unterschreiten.

Diese Grenze wird selbst dann unterschritten, wenn diese TPU nochmals extrudiert werden (Extrusionsartikel, Recycling) oder im Spritzgießverfahren verarbeitet werden.

Es wird weiterhin deutlich, dass der teilweise Ersatz der Polyesterdiole durch handelsübliche Polyetherdiole, wie die hydroxylgruppenhaltigen Polymerisationsprodukte von Tetrahydrofuran (z.B. Terathane® 2000) oder Polyetherdiole auf Ethylenoxid und Propylenoxid-Basis (z.B. Acclaim® 2220) den Kondensatwert erniedrigen.

Dies macht nochmals deutlich, dass die Polyesterdiole im wesentlichen zum Fogging-Effekt, beitragen.

Für viele Anwendungen im Automobilinnenraum ist eine ausgeprägte Heißluft- und Wärmestabilität (500h bei 120°C mit geringem mechanischem Abbau) notwendig, weshalb TPU auf reiner Polyetherbasis ungeeignet sind und zumindest in Abmischung mit Polyesterdiolen eingesetzt werden müssen.

**Patentansprüche**

1. Formkörper aus thermoplastischen Polyurethanen, **dadurch gekennzeichnet, dass** sie einen Kondensatwert von <2 mg / 10 g thermoplastisches Polyurethan bei einem Foggingtest gemäß DIN 75 201 B bei 120°C und 16 Stunden aufweisen und erhältlich sind aus thermoplastischen Polyurethanen mit einem Kondensatwert von <2 mg / 10 g thermoplastisches Polyurethan bei einem Foggingtest gemäß DIN 75 201 B bei 120°C und 16 Stunden, wobei die thermoplastischen Polyurethane erhältlich sind aus

    A) einem organischen Diisocyanat,

    B) 20 bis 100 Gew.-%, bevorzugt 30 bis 100 Gew.-% Polyesterpolyol mit einem zahlenmittleren Molekulargewicht von 600 bis 10 000 g/Mol und einem Gehalt an 1:1-Ringestern aus Dicarbonsäure und Diol von <0,2 Gew.-%, bezogen auf Polyesterpolyol, bevorzugt von <0,15 Gew.-% und 0 bis 80 Gew.-% Polyetherpolyol oder Polycarbonatdiol mit einem zahlenmittleren Molekulargewicht von jeweils 600 bis 10 000 g / Mol und

C) einem Diol- und/oder Diamin-Kettenverlängerer mit einem mittleren Molekulargewicht von 60 bis 500 g/ Mol, unter Zusatz von

D) gegebenenfalls Katalysatoren und

E) gegebenenfalls üblichen Hilfsmitteln und Zusatzstoffen, wobei das Äquivalenzverhältnis von Diisocyanat A) zu Polyol B) zwischen 1,5:1,0 und 10,0:1,0 liegt und wobei die NCO-Kennzahl (gebildet aus dem mit 100 multiplizierten Quotienten der Äquivalenzverhältnisse von Isocyanatgruppen und der Summe der Hydroxylgruppen aus Polyol und Kettenverlängerungsmittel) 95 bis 105 beträgt.

2.  Formkörper gemäß Anspruch 1, **dadurch gekennzeichnet, dass** das organische Diisocyanat A) Hexamethylendiisocyanat (HDI), Dicyclohexylmethandiisocyanat (hydriertes MDI), Isophorondiisocyanat (IPDI) oder ein Gemisch daraus ist.

3.  Formkörper gemäß Anspruch 1, **dadurch gekennzeichnet, dass** der Kettenverlängerer C) aus 80 bis 100 Gew.-% 1,6-Hexandiol und 0 bis 20 Gew.-% eines Kettenverlängerers mit einem zahlenmittleren Molekulargewicht von 60 bis 500 g/mol, der verschieden von 1,6-Hexandiol ist, besteht.

4.  Formkörper gemäß Anspruch 1, **dadurch gekennzeichnet, dass** das organische Diisocyanat A) Hexamethylendiisocyanat (HDI), Dicyclohexyhnethandiisocyanat (hydriertes MDI), Isophorondiisocyanat (IPDI) oder ein Gemisch daraus ist, die Komponente B) ein Gemisch aus 20 bis 80 Gew.-% Polyesterpolyol und 20 bis 80 Gew.-% Polytetrahydrofurandiol mit einem zahlenmittleren Molekulargewicht des Polyesterpolyols von 600 bis 5000 g/Mol und mit einem Gehalt an 1:1 Ringester aus Dicarbonsäure und Diol von <0,2 Gew.-% (bevorzugt <0,15 Gew.-%), bezogen auf Polyesterpolyol, im Polyesterpolyol und einem zahlenmittleren Molekulargewicht des Polytetrahydrofurandiols von 600 bis 1500 g/Mol, ist und der Kettenverlängerer C) ein Gemisch aus 80 bis 100 Gew.-% 1,6-Hexandiol und 0 bis 20 Gew.-% eines Kettenverlängerers mit einem zahlenmittleren Molekulargewicht von 60 bis 500 g/Mol ist, der verschieden von 1,6-Hexandiol ist.

5.  Verfahren zur Herstellung von Formkörpern gemäß einem der Ansprüche 1 bis 4, **dadurch gekennzeichnet, dass** thermoplastische Polyurethane aus A), B) und C) unter Zugabe gegebenenfalls von Katalysatoren D) und üblichen Hilfsmitteln und Zusatzstoffen E) hergestellt werden und die so hergestellten thermoplastischen Polyurethane nach bekannten Verarbeitungsschritten zu Formkörpern verarbeitet werden.

**Claims**

1.  Mouldings of thermoplastic polyurethanes,
    **characterised in that** they exhibit a condensate value of <2 mg/10 g of thermoplastic polyurethane in a fogging test to DIN 75 201 B at 120°C and over 16 hours and may be obtained from thermoplastic polyurethanes with a condensate value of <2 mg/10 g of thermoplastic polyurethane in a fogging test to DIN 75 201 B at 120°C and over 16 hours, wherein the thermoplastic polyurethanes may be obtained from

    A) an organic diisocyanate,

    B) 20 to 100 wt.%, preferably 30 to 100 wt.%, of polyester polyol with a number average molecular weight of from 600 to 10000 g/mol and a content of 1:1 ring esters of dicarboxylic acid and diol of <0.2 wt.% relative to polyester polyol, preferably of <0.15 wt.%, and 0 to 80 wt.% of polyether polyol or polycarbonate diol with a number average molecular weight of in each case from 600 to 10000 g/mol and

    C) a diol and/or diamine chain extender with an average molecular weight of from 60 to 500 g/mol, with the addition of

    D) optionally catalysts and

    E) optionally conventional auxiliary substances and additives,

wherein the equivalence ratio of diisocyanate A) to polyol B) is between 1.5:1.0 and 10.0:1.0 and wherein the NCO index (formed from the quotients, multiplied by 100, of the equivalence ratios of isocyanate groups and the sum of the hydroxyl groups of polyol and chain extending agent) is 95 to 105.

2. Mouldings according to claim 1, **characterised in that** the organic diisocyanate A) is hexamethylene diisocyanate (HDI), dicyclohexylmethane diisocyanate (hydrogenated MDI), isophorone diisocyanate (IPDI) or a mixture thereof.

3. Mouldings according to claim 1, **characterised in that** the chain extender C) consists of 80 to 100 wt.% 1,6-hexanediol and 0 to 20 wt.% of a chain extender with a number average molecular weight of 60 to 500 g/mol which is different from 1,6-hexanediol.

4. Mouldings according to claim 1, **characterised in that** the organic diisocyanate A) is hexamethylene diisocyanate (HDI), dicyclohexylmethane diisocyanate (hydrogenated MDI), isophorone diisocyanate (IPDI) or a mixture thereof, component B) is a mixture of 20 to 80 wt.% polyester polyol and 20 to 80 wt.% polytetrahydrofuran diol with a number average molecular weight of polyester polyol of 600 to 5000 g/mol and having a content of 1:1 ring esters of dicarboxylic acid and diol <0.2 wt.% (preferably <0.15 wt.%) relative to polyester polyol, in the polyester polyol and a number average molecular weight of polytetrahydrofuran diol of 600 to 1500 g/mol and the chain extender C) is a mixture of 80 to 100 wt.% 1,6-hexanediol and 0 to 20 wt.% of a chain extender with a number average molecular weight of 60 to 500 g/mol which is different from 1,6-hexanediol.

5. Process for producing mouldings according to any one of claims 1 to 4, **characterised in that** thermoplastic polyurethanes of A), B) and C) are produced with the addition optionally of catalysts D) and conventional auxiliary substances and additives E) and the thermoplastic polyurethanes produced in this way are processed by known processing stages to yield mouldings.

**Revendications**

1. Objets moulés en polyuréthannes thermoplastiques **caractérisés en ce qu'**ils ont un condensat inférieur à 2 mg/10 g du polyuréthanne thermoplastique à l'essai de "fogging" de la norme allemande DIN 75201 B à 120°C et en 16 h et **en ce qu'**ils ont été obtenus à partir de polyuréthannes thermoplastiques ayant un condensat inférieur à 2 mg/10 g du polyuréthanne thermoplastique à l'essai de fogging selon DIN 75 201 B à 120°C et en 16 h, les polyuréthannes thermoplastiques en question étant eux-mêmes obtenus à partir de

A) un diisocyanate organique
B) 20 à 100 % en poids, de préférence 30 à 100 % en poids d'un polyester-polyol à un poids moléculaire moyen, moyenne en nombre, de 600 à 10 000 g/mol et une teneur en esters cycliques 1:1 d'acide dicarboxylique et de diol inférieure à 0,2 % de son poids, de préférence inférieure à 0,15 % de son poids, et 0 à 80 % en poids, d'un polyéther-polyol ou d'un polycarbonate-diol à un poids moléculaire moyen, moyenne en nombre, de 600 à 10 000 g/mol pour chacun et
C) un agent d'allongement des chaînes du type diol et/ou diamine à un poids moléculaire moyen de 60 à 500 g/mol, avec adjonction de
D) le cas échéant des catalyseurs et
E) le cas échéant des produits auxiliaires et additifs usuels, avec un rapport de 1,5:1,0 à 10,0:1,0 entre les équivalents du diisocyanate A) et les équivalents du polyol B), et un indice de NCO (quotient, multiplié par 100, du rapport entre les équivalents de groupes isocyanates et la somme des groupes hydroxy du polyol et de l'agent d'allongement des chaînes) de 95 à 105.

2. Objets moulés selon la revendication 1, **caractérisés en ce que** le diisocyanate organique A) est l'hexaméthytènediisocyanate (HDI), le dicyclohexylméthanediisocyanate (MDI hydrogéné), l'isophoronediisocyanate (IPDI) ou un mélange de ces diisocyanates.

3. Objets moulés selon la revendication 1, **caractérisés en ce que** l'agent d'allongement des chaînes C) consiste en 80 à 100 % en poids de 1,6-hexanediol et 0 à 20 % en poids d'un agent d'allongement des chaînes à un poids moléculaire moyen, moyenne en nombre de 60 à 500 g/mol, différent du 1,6-hexanediol.

4. Objets moulés selon la revendication 1, **caractérisés en ce que** le diisocyanate organique A) consiste en l'hexaméthylènediisocyanate (HDI), le dicyclohexylméthanediisocyanate (MDI hydrogéné), l'isophoronediisocyanate (IPDI) ou un mélange de ces diisocyanates, le composant B) consistant en un mélange de 20 à 80 % en poids d'un polyester-polyol et 20 à 80 % en poids d'un polytétrahydrofuranne-diol, le polyester-polyol ayant un poids moléculaire moyen, moyenne en nombre, de 600 à 5 000 g/mol et une teneur en esters cycliques 1:1 d'acide dicarboxylique et de diol inférieure à 0,2 % (de préférence inférieure à 0,15 %) du poids du polyester-polyol, et le polytétrahydrofuranne-diol ayant un poids moléculaire moyen, moyenne en nombre, de 600 à 1500 g/mol, et l'agent d'allongement des chaînes C) consistant en un mélange de 80 à 100 % en poids de 1,6-hexanediol et 0 à 20 % en poids d'un agent d'allongement des chaînes ayant un poids moléculaire moyen, moyenne en nombre de 60 à 500 g/mol, différent du 1,6-hexanediol.

5. Procédé pour la fabrication des objets moulés selon l'une des revendications 1 à 4, **caractérisé en ce que** l'on prépare des polyuréthannes thermoplastiques à partir de A), B) et C) avec adjonction éventuelle des catalyseurs D) et des produits auxiliaires et additifs usuels E) et on façonne ces polyuréthannes thermoplastiques en objets moulés par des techniques connues.